# EUROPEAN PATENT SPECIFICATION

(11) **EP 2 047 351 B1**
(45) Date of publication and mention of the grant of the patent: **11.08.2010**
(21) Application number: 07748326.1
(22) Date of filing: 09.07.2007
(51) Int. Cl.: G05G 1/36, G05G 1/40, B60T 7/06

(54) **LOAD HANDLING VEHICLE**
LASTHANDHABUNGSFAHRZEUG
VEHICULE DE MANUTENTION DE CHARGES

(30) Priority: 27.07.2006 SE 0601607
(43) Date of publication of application: 15.04.2009
(73) Proprietor: Cargotec Patenter Handelsbolag, 341 81 Ljungby (SE)
(72) Inventor: EKLUND, Sven-Gunnar, S-341 39 Ljungby (SE); GARTNELL, Lars, S-302 73 Halmstad (SE)
(74) Representative: Lundquist, Lars-Olof
(86) International application number: PCT/SE2007/000674
(87) International publication number: WO 2008/013491

(56) References cited:
- US-A- 1 478 407
- US-A- 2 384 890
- US-A- 4 010 657
- US-A- 4 060 144

## Description

This invention relates to a load handling vehicle exhibiting an operator's compartment, which comprises a floor portion and a pedal assembly, said pedal assembly comprising a pedal.

In particular, the invention relates to a truck having a lifting assembly, for example a forklift truck, which exhibits an operator's compartment, wherein the central part of the floor portion of the operator's compartment, including the operator's seat, steering gear, controls and pedal assembly, can be turned 0-180 degrees in order to enable forward-facing or sideways-facing driving of the vehicle both forward and backwards. In this context, sideways-facing driving means that the body of the operator is facing in a direction deviating from the driving direction during the driving. Since the pedals follow the turning movement of such an operator's compartment, the pedal assembly has to be compact and centrally mounted. Furthermore, it is desirable that the positions of the pedals should be adjustable to fit different operators.

A vehicle of the type mentioned by way of introduction is described in US 2 384 890. However, the pedal assembly of this vehicle is relatively bulky and, in addition, adjustment possibilities for an ergonomic setting of the pedal positions are missing.

A relatively compact pedal assembly is described in US 4 060 144, which reveals all the features of the preamble of claim 1, which discloses a brake and throttle control assembly for a mining vehicle. As is the case in load handling vehicles having a turning operator's compartment, the space which is available for the pedal assembly is limited in mining vehicles. The assembly exhibits two coaxial shafts, which are supported in bearings on two supports being welded to the cab floor. An accelerator pedal is attached to one shaft and a brake pedal to the other shaft. When operating the accelerator pedal, one shaft is caused to rotate, and when operating the brake pedal, the other shaft is caused to rotate. An angular sensor is arranged at the end of the respective shaft in order to measure throttle position and brake position. However, the assembly according to US 4 060 144 exhibits a number of problems. Even if the assembly is compact in the depth direction, it exhibits a relatively large extension in the lateral direction because of the angular sensors, for which there is normally no space in a load handling vehicle having a turning operator's compartment. Furthermore, the assembly according to US 4 060 144 lacks adjustment possibilities for operator adapted adjustment of the pedal positions.

The object of the present invention is to produce a load handling vehicle with a driver's compartment exhibiting a compact pedal assembly, said pedal assembly being adjustable in order to enable adjustment of the pedal positions.

The vehicle according to the invention is **characterized in that** the pedal assembly comprises a console on which said pedal is arranged, said console extending through an opening in the floor portion so that the console comprises an upper portion, which is arranged above the plane of the floor portion, and a lower portion, which is arranged below the plane of the floor portion, said console being tiltably arranged at the floor portion about a pivot shaft, which is parallel to the plane of the floor portion.

Owing to the pivot supported console, the pedal assembly according to the invention is compact and also individually adjustable. By means of the central attachment of the console and the central positioning of the brake valve, the floor portion can be designed with a radius being smaller than the extension of the pedals, something which is a great advantage, particularly in turning operator's compartments. Furthermore, the extension of the console below the floor portion enables sensors for detecting the pedal movements, for example the sensor for the brake pedal movement, to be placed below the floor portion, which allows a narrow pedal assembly.

In the following, the invention will be described more closely with reference to the attached drawings.
Figure 1 shows a pedal assembly according to one embodiment of the invention.
Figure 2 shows the pedal assembly of Figure 1 from the side.
Figure 3 shows the pedal assembly of Figure 1 from above.
Figure 4 shows the pedal assembly of Figure 1 in a view where the floor portion has been removed.
Figure 5 shows a detailed view of a portion of the pedal assembly of Figure 1.

In the figures, similar reference numerals refer to similar parts.

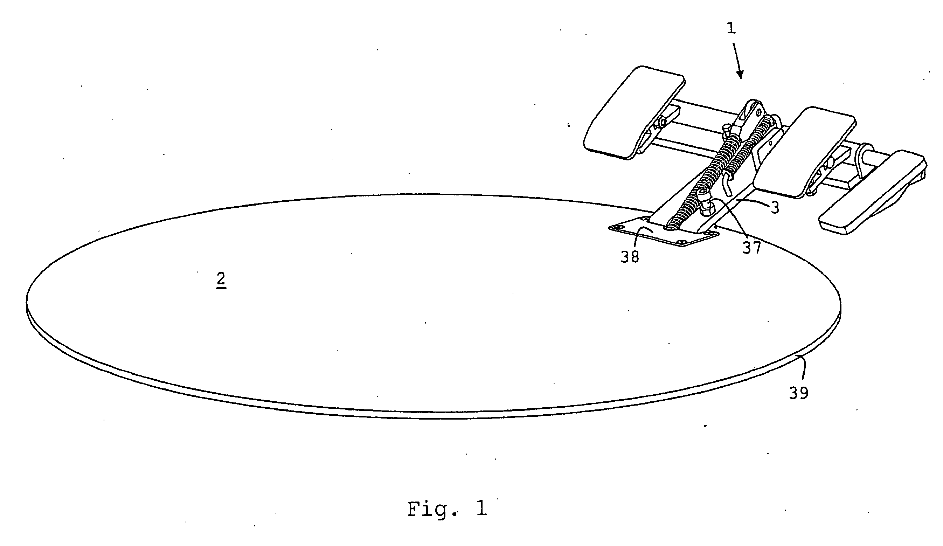

Figure 1 shows a portion of the operator's compartment of a load handling vehicle, in this case a forklift truck, according to one embodiment of the invention. The operator's compartment comprises a pedal assembly 1, which is mounted in a circular floor portion 2. In the floor portion 2, also other equipment (not shown) for driving the forklift truck is mounted, such as an operator's seat, steering gear and controls for the loading devices of the forklift truck. In the forklift truck, the floor portion 2, including the pedal assembly 1, can be turned 180 degrees in order to enable forward-facing driving of the forklift truck both in a forward driving direction and in a backward driving direction.

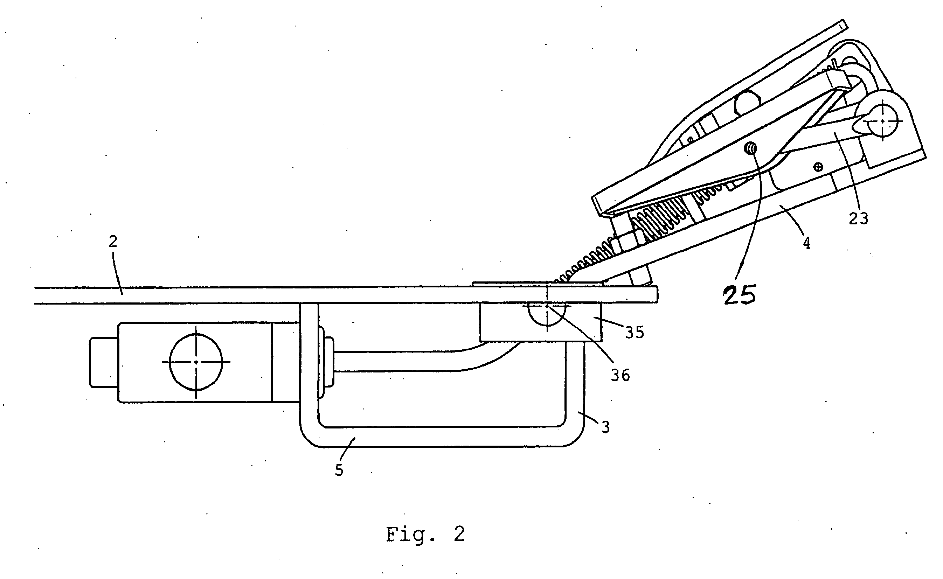

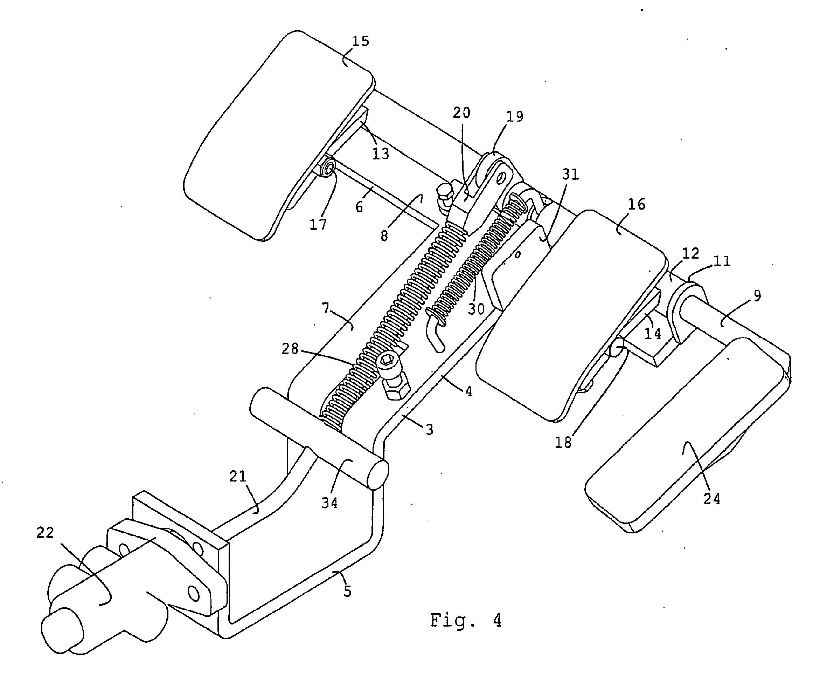

The pedal assembly 1 comprises a console 3 in the form of a cut out and bent metal sheet. In the longitudinal direction, the console 3 has a first, upper portion 4, which is planar and T-shaped, and a second, lower portion 5, which is U-shaped (se Figure 2 and 4). The upper portion 4 exhibits a rectangular first, upper part 6, extending in the cross-direction of the console 3, and a rectangular second, lower part 7, extending in the longitudinal direction of the console 3 and connecting orthogonally to the central portion of the upper part 6.

The console 3 is mounted in an opening in the floor portion 2 so that the upper portion 4 projects above the plane of the floor portion 2 and the lower portion 5 is located below the plane of the floor portion 2. Accordingly, the longitudinal direction of the console 3 forms an angle with the plane of the floor portion 2, and the longitudinal direction of the console 3, when being projected onto the plane of the floor portion 2, has a substantially radial alignment. The opening, which is concealed by a cover plate 38 in the figures, is arranged at the rim 39 of the floor portion 2 so that the upper portion 4 of the console 3 extends out past the rim 39.

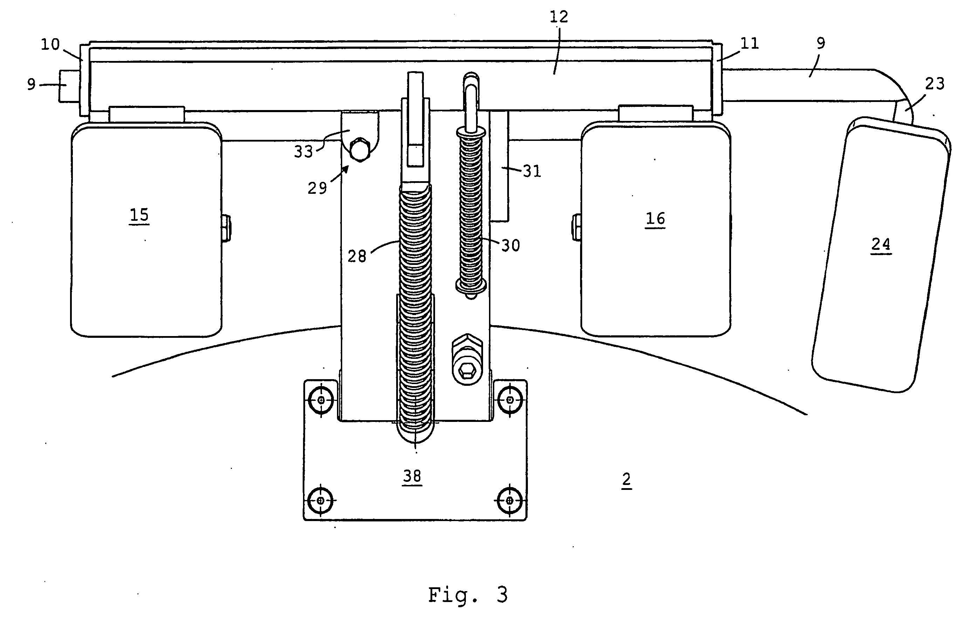

On the top side 8 of the upper part 6, a homogenous first, inner shaft 9 is rotatably mounted in two shaft supports 10, 11, projecting from the top side 8 (see Figure 3). On the inner shaft 9, and between the shaft supports 10, 11, a tubular second, outer shaft 12 is arranged, said outer shaft 12 also being rotatably mounted in the shaft supports 10 and 11. The outer shaft 12 has an internal diameter which is somewhat larger than the diameter of the inner shaft 9, so that the outer shaft 12 is substantially frictionlessly and rotatably arranged onto and coaxially to the inner shaft 9.

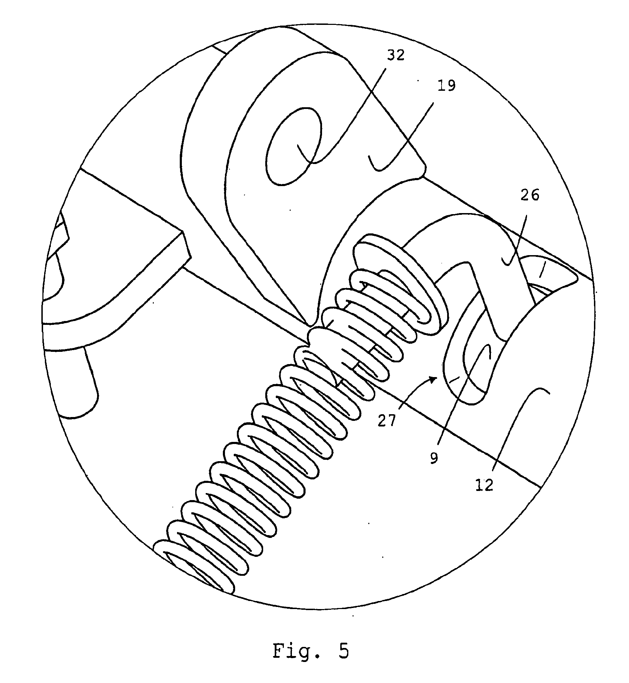

At each shaft end of the outer shaft 12, a brake pedal arm 13, 14 is rigidly connected to the envelope surface of the outer shaft 12, so that the brake pedal arms 13, 14 are projecting from the outer shaft 12 substantially in parallel with each other in a direction obliquely downwards towards the centre of the floor portion 2. On each brake pedal arm 13, 14, a brake pedal 15, 16 is pivotally mounted in a pivot shaft 17, 18 (see Figure 4), which is substantially parallel to the outer shaft 12. On the envelope surface of the outer shaft 12 is also a link lug 19 rigidly mounted. The lug 19 projects from the central portion of the shaft 12 and exhibits a through hole 32 (see Figure 5) for articulated cooperation with a forked link 20, which actuates a hydraulic valve 22 via an adjustable push rod 21. The hydraulic valve 22 is mounted in the console 3, more specifically in the rear part of the U-shaped lower portion 5 of the console 3, i.e. below the plane of the floor portion 2.

A gas pedal arm 23 is rigidly connected to the right-hand end of the inner shaft 9, so that the gas pedal arm 23 forms an angle with the longitudinal direction of the shaft 9 which is somewhat smaller than 90 degrees. The gas pedal arm 23 projects in a direction obliquely downwards towards the centre of the floor portion 2. On the gas pedal arm 23, a gas pedal 24 is pivotally mounted in a pivot shaft 25 (see Figure 4). A sensor pin 26, in the form of an angled round iron, is rigidly mounted on the inner shaft. The sensor pin 26 projects from the inner shaft 9 through an opening 27 in the outer shaft 12, to the side of the lug 19 (see Figure 5). In the circumferential direction of the shafts 9, 12, the opening 27 has an extension which allows the shafts 9, 12 to be rotated independently of each other within a predetermined angular range.

In order to brake the forklift truck, the operator of the forklift truck depresses one or both of the brake pedals 15, 16, wherein the resulting braking movement is transformed into a rotary movement of the outer shaft 12. The rotary movement is detected by the hydraulic valve 22 via the lug 19, the forked link 20 and the push rod 21. In a known way, the hydraulic valve 22 will then provide for the generation of a braking torque for the forklift truck, for example by means of activating the travel brakes of the forklift truck as function of detected brake position. Owing to the opening 27, the braking movement does not influence the sensor pin 26 and the inner shaft 9. A first pressure spring 28 is arranged for returning the brake pedals 15, 16 to an adjustable initial position when they are not depressed, said initial position thus constituting an upper end position for the brake pedals 15, 16. Also a second lug 33, having an adjusting screw 29, is arranged on the outer shaft 12. The adjusting screw 29 is set so that it is brought to cooperate with the console 3 at the upper end position of the brake pedals 15, 16. Accordingly, the position of the adjusting screw 29 defines the upper end position.

In order to generate an increased throttle opening, the operator depresses the accelerator pedal 24, wherein the resulting throttle opening movement is transformed into a rotary movement of the inner shaft 9. Owing to the opening 27, the throttle opening movement does not influence the lug 19 and the outer shaft 12. The throttle opening movement is detected by a sensor (not shown) which, in a known way, is arranged to read the position of the sensor pin 26. A second pressure spring 30 is arranged for returning the accelerator pedal 24 to an adjustable initial position when it is not depressed, said initial position thus constituting an upper end position for the accelerator pedal 24. The pedal assembly preferably comprises a stop (not shown) for the inner shaft 9, said stop defining the upper end position. The sensor is mounted on a sensor attachment 31, which is rigidly connected to the console 3 in connection with the projecting sensor pin 26. The sensor can be mechanically connected to the sensor pin 26, but is preferably some type of contactless sensor. The sensor provides for the generation of a driving torque for the forklift truck as a function of detected throttle position.

Accordingly, the console 3 supports brake and accelerator pedals with associated sensors for detecting the movements of the brake and accelerator pedals, wherein the hydraulic valve for detecting the braking movement is arranged below the plane of the floor portion and wherein the sensor for the throttle opening movement is arranged above the plane of the floor portion. Alternatively, the pedal assembly can also comprise a second sensor (not shown) for the braking movement, said second sensor being arranged on the console above the plane of the floor portion. Such a second sensor, which can be contactless, can be used in order to supply a control and regulating system of the forklift truck with direct information about the braking movement.

The console 3 is adjustably connected to the floor portion 2 by means of an attachment means 34 in the form of a shaft, which is rigidly connected to the console 3 between the upper portion 4 and the lower portion 5 of the console 3. The shaft 34 is arranged to cooperate with shaft attachments 35 in the floor portion 2 in order to constitute a pivot shaft 36, in the plane of the floor portion 2 or in a plane being parallel to the plane of the floor portion 2, for the pedal assembly 1 (see Figure 2). In the shown exemplary embodiment, the shaft attachments 35 are arranged at the bottom side of the floor portion 2, but it is appreciated that they alternatively can be arranged at the top side of the floor portion 2 or in the plane of the floor portion 2. Accordingly, the angle of the console 3 in relation to the floor portion 2, and thereby the positions of the pedals 15, 16 and 24 in the height direction, can be adjusted into the desired position by means of tilting the console 3 about the pivot shaft 36. The pivot shaft 36 is orthogonal to the longitudinal direction of the console 3 and, accordingly, the pivot shaft 36 is also orthogonal to the longitudinal direction of the operator's compartment irrespective of if the operator's compartment is set for driving forward or backward. The pedal assembly 1 comprises a locking means (not shown) for locking the console 3 in the desired position. Accordingly, the pedal assembly 1 is adjustably and lockably arranged in the floor portion 2 in order to enable an individual and ergonomical setting of the pedals 15, 16 and 24 in relation to the floor portion 2.

The adjustment of the console 3 into the desired position can be done purely manually, e.g. by means of a manually actuated adjusting screw 37. Alternatively, the pedal assembly 1 comprises an electric motor (not shown), by means of which the operator can set and lock the console 3 in the desired position in a more automated way. Such electric motors with associated control circuits are known per se, and will not be described more closely here.

In the foregoing, the invention has been described starting from a specific embodiment. It is appreciated, however, that alternative embodiments and variants are possible within the scope of the invention. For instance, instead of the outer shaft or the inner shaft, the pedal assembly can comprise two adjacently disposed partial shafts, each being actuated by a pedal of its own and each having its own sensor, wherein the pedal of one partial shaft can be actuated independently of the pedal of the other partial shaft and wherein the movements of the pedals of the partial shafts can be detected separately. For example, the inner shaft can be divided into two partial shafts, each having an accelerator pedal of its own, wherein one accelerator pedal is for the forward driving direction and the other is for the backward driving direction. It is also appreciated that only a single brake pedal can.be arranged at the outer shaft. In a pedal assembly where the inner shaft is divided into two partial shafts, each having an accelerator pedal of its own, the single brake pedal can for example be arranged between the two accelerator pedals, wherein the operator uses one accelerator pedal for generating a driving torque in the forward driving direction, the other accelerator pedal for generating a driving torque in the backward driving direction, and the brake pedal for generating a braking torque.

Even though the invention in the foregoing has been described starting from a load handling vehicle where the floor portion and the pedal assembly can be turned 180 degrees in relation to the longitudinal axis of the vehicle in order to enable forward-facing driving of the vehicle in a forward driving direction and in a backward driving direction, it is appreciated that the invention also is applicable to load handling vehicles where the floor portion and the pedal assembly can be turned into an optional angle within the interval 0-180 degrees in order to enable forward-facing or sideways-facing driving of the vehicle in the forward driving direction and the backward driving direction. Accordingly, in such a vehicle, the operator's compartment can be set such that the longitudinal direction of the operator's compartment and the longitudinal direction of the vehicle do not coincide, something which might be preferable in certain driving situations. It is also appreciated that the invention is applicable in a load handling vehicle where the floor portion and the pedal assembly both are fixed, i.e. not able to turn, in relation to the longitudinal axis of the vehicle.

It is also appreciated that the pedal assembly per se can be provided with additional adjustment possibilities. The upper part 6 of the upper portion 4 of the console 3 can for example be pivotally and lockably connected to the lower part 7, whereby the desired angle between the parts 6 and 7 can be set.

## Claims

1. A load handling vehicle exhibiting an operator's compartment, comprising a floor portion (2) and a pedal assembly (1), said pedal assembly (1) comprising a pedal (15, 16, 24), **characterized in that** the pedal assembly (1) comprises a console (3) on which said pedal (15, 16, 24) is arranged, said console (3) extending through an opening in the floor portion (2) so that the console (3) comprises an upper portion (4), which is arranged above the plane of the floor portion (2), and a lower portion (5), which is arranged below the plane of the floor portion (2), said console (3) being tiltably arranged at the floor portion (2) about a pivot shaft (36), which is parallel to the plane of the floor portion (2).

2. The vehicle according to claim 1, **characterized in that** the floor portion (2) and the pedal assembly (1) together can be turned within the interval 0-180 degrees in relation to the longitudinal axis of the vehicle in order to enable forward-facing or sideways-facing driving of the vehicle in a forward driving direction and in a backward driving direction.

3. The vehicle according to claim 1, **characterized in that** the floor portion (2) and the pedal assembly (1) are fixed in relation to the longitudinal axis of the vehicle, and also **in that** said pivot shaft (36) is orthogonal to the longitudinal direction of the vehicle.

4. The vehicle according to any one of claims 1-3, **characterized in that** the upper portion (4) of the console (3) extends out past the rim (39) of the floor portion (2).

5. The vehicle according to any one of claims 1-4, **characterized in that** said pedal is a brake pedal (15, 16), that the pedal assembly (1) comprises a sensor (22) associated to the brake pedal (15, 16) for detecting the movement of the brake pedal (15, 16), that the pedal assembly (1) comprises a second pedal, which is arranged on the console (24) and is an accelerator pedal (24), and that the pedal assembly (1) comprises a sensor associated to the accelerator pedal (24) for detecting the movement of the accelerator pedal (24), said pedals (15, 16, 24) and sensors (22) being supported by the console (3).

6. The vehicle according to claim 5, **characterized in that** said accelerator pedal (24) is supported by a first, inner shaft (9) and that said brake pedal (15, 16) is supported by a coaxial second, outer shaft (12), said shafts (9, 12) being rotatably mounted on the upper portion (4) of the console (3).

7. The vehicle according to claim 6, **characterized in that** the sensor (22) of the brake pedal (15, 16) is a hydraulic valve arranged for detecting the movement of the outer shaft (12), said hydraulic valve (22) being arranged below the plane of the floor portion (2).

8. The vehicle according to claim 7, **characterized in that** the pedal assembly (1) comprises a second sensor for detecting the movement of the brake pedal (15, 16), said second sensor being supported by the console (3) and arranged above the plane of the floor portion (2).

9. The vehicle according to claim 6, **characterized in that** the sensor of the accelerator pedal (24) is a contactless sensor arranged for detecting the movement of the inner shaft (9).

10. The vehicle according to claim 9, **characterized in that** the sensor of the accelerator pedal (24) is arranged above the plane of the floor portion (2).

## Patentansprüche

1. Lasthandhabungsvorrichtung, die eine Bedienerkabine aufweist und einen Bodenabschnitt (2) sowie eine Pedalanordnung (1) umfasst, wobei die Pedalanordnung (1) ein Pedal (15, 16, 24) enthält, **dadurch gekennzeichnet, dass** die Pedalanordnung (1) eine Konsole (3) umfasst, an der das Pedal (15, 16, 24) angeordnet ist, wobei sich die Konsole (3) durch eine Öffnung im Bodenabschnitt (2) erstreckt, so dass die Konsole (3) einen oberen Abschnitt (4), der über der Ebene des Bodenabschnitts (2) angeordnet ist, und einen unteren Abschnitt (5), der unter der Ebene des Bodenabschnitts (2) angeordnet ist, umfasst, wobei die Konsole (3) an dem Bodenabschnitt (2) um eine Schwenkwelle (36), die zu der Ebene des Bodenabschnitts (2) parallel ist, neigbar angeordnet ist.

2. Fahrzeug nach Anspruch 1, **dadurch gekennzeichnet, dass** der Bodenabschnitt (2) und die Pedalanordnung (1) gemeinsam innerhalb eines Intervalls von 0-180 Grad in Bezug auf die Längsachse des Fahrzeugs gedreht werden können, um einen nach vorn orientierten oder zur Seite orientierten Antrieb des Fahrzeugs in einer Vorwärtsantriebsrichtung und in einer Rückwärtsantriebsrichtung zu ermöglichen.

3. Fahrzeug nach Anspruch 1, **dadurch gekennzeichnet, dass** der Bodenabschnitt (2) und die Pedalanordnung (1) in Bezug auf die Längsachse des Fahrzeugs fest sind und dass die Schwenkwelle (36) zu der Längsrichtung des Fahrzeugs senkrecht ist.

4. Fahrzeug nach einem der Ansprüche 1-3, **dadurch gekennzeichnet, dass** sich der obere Abschnitt (4) der Konsole (3) am Rand (39) des Bodenabschnitts (2) vorbei nach außen erstreckt.

5. Fahrzeug nach einem der Ansprüche 1-4, **dadurch gekennzeichnet, dass** das Pedal ein Bremspedal (15, 16) ist, dass die Pedalanordnung (1) einen dem Bremspedal (15, 16) zugeordneten Sensor (22) umfasst, um die Bewegung des Bremspedals (15, 16) zu detektieren, dass die Pedalanordnung (1) ein zweites Pedal umfasst, das an der Konsole (24) angeordnet ist und ein Fahrpedal (24) ist, und dass die Pedalanordnung (1) einen dem Fahrpedal (24) zugeordneten Sensor umfasst, um die Bewegung des Fahrpedals (24) zu detektieren, wobei die Pedale (15, 16, 24) und Sensoren (22) durch die Konsole (3) unterstützt sind.

6. Fahrzeug nach Anspruch 5, **dadurch gekennzeichnet, dass** das Fahrpedal (24) durch eine erste innere Welle (9) unterstützt ist und dass das Bremspedal (15, 16) durch eine koaxiale zweite äußere Welle (12) unterstützt ist, wobei die Wellen (9, 12) am oberen Abschnitt (4) der Konsole (3) drehbar angebracht sind.

7. Fahrzeug nach Anspruch 6, **dadurch gekennzeichnet, dass** der Sensor (22) des Bremspedals (15, 16) ein Hydraulikventil ist, das dazu ausgelegt ist, die Bewegung der äußeren Welle (12) zu detektieren, wobei das Hydraulikventil (22) unter der Ebene des Bodenabschnitts (2) angeordnet ist.

8. Fahrzeug nach Anspruch 7, **dadurch gekennzeichnet, dass** die Pedalanordnung (1) einen zweiten Sensor umfasst, um die Bewegung des Bremspedals (15, 16) zu detektieren, wobei der zweite Sensor durch die Konsole (3) unterstützt ist und über der Ebene des Bodenabschnitts (2) angeordnet ist.

9. Fahrzeug nach Anspruch 6, **dadurch gekennzeichnet, dass** der Sensor des Fahrpedals (24) ein kontaktloser Sensor ist, der dazu ausgelegt ist, die Bewegung der inneren Welle (9) zu detektieren.

10. Fahrzeug nach Anspruch 9, **dadurch gekennzeichnet, dass** der Sensor des Fahrpedals (24) über der Ebene des Bodenabschnitts (2) angeordnet ist.

## Revendications

1. Véhicule de manutention de charges présentant un compartiment d'opérateur, comprenant une partie de sol (2) et un ensemble de pédale (1), ledit ensemble de pédale (1) comprenant une pédale (15, 16, 24), **caractérisé en ce que** l'ensemble de pédale (1) comprend une console (3) sur laquelle ladite pédale (15, 16, 24) est agencée, ladite console (3) s'étendant à travers une ouverture dans la partie de sol (2) de sorte que la console (3) comprenne une partie supérieure (4), qui est agencée au-dessus du plan de la partie de sol (2), et une partie inférieure (5), qui est agencée sous le plan de la partie de sol (2), ladite console (3) étant agencée de manière inclinable au niveau de la partie du sol (2) autour d'un arbre de pivot (36), qui est parallèle au plan de la partie de sol (2).

2. Véhicule selon la revendication 1, **caractérisé en ce que** la partie de sol (2) et l'ensemble de pédale (1) peuvent conjointement être tournés dans l'intervalle de 0 à 180° par rapport à l'axe longitudinal du véhicule afin de permettre la conduite face à l'avant ou face aux côtés du véhicule dans une direction de conduite vers l'avant et dans une direction de conduite vers l'arrière.

3. Véhicule selon la revendication 1, **caractérisé en ce que** la partie de sol (2) et l'ensemble de pédale (1) sont fixés par rapport à l'axe longitudinal du véhicule, et également **en ce que** ledit arbre de pivot (36) est orthogonal à la direction longitudinale du véhicule.

4. Véhicule selon l'une quelconque des revendications 1 à 3, **caractérisé en ce que** la partie supérieure (4) de la console (3) s'étend au-delà de la bordure (39) de la partie de sol (2).

5. Véhicule selon l'une quelconque des revendications 1 à 4, **caractérisé en ce que** ladite pédale est une pédale de frein (15, 16), **en ce que** l'ensemble de pédale comprend un capteur (22) associé à la pédale de frein (15, 16) pour détecter le mouvement de la pédale de frein (15, 16), **en ce que** l'ensemble de pédale (1) comprend une deuxième pédale, qui est agencée sur la console (24) et est une pédale d'accélérateur (24), et **en ce que** l'ensemble de pédale (1) comprend un capteur associé à la pédale d'accélérateur (24) pour détecter le mouvement de la pédale d'accélérateur (24), lesdites pédales (15, 16, 24) et lesdits capteurs (22) étant supportés par la console (3).

6. Véhicule selon la revendication 5, **caractérisé en ce que** ladite pédale d'accélérateur (24) est supportée par un premier arbre intérieur (9) et **en ce que** ladite pédale de frein (15, 16) est supportée par un deuxième arbre extérieur coaxial (12), ledit arbre (9, 12) étant monté à rotation sur la partie supérieure (4) de la console (3).

7. Véhicule selon la revendication 6, **caractérisé en ce que** le capteur (22) de la pédale de frein (15, 16) est une soupape hydraulique agencée pour détecter le mouvement de l'arbre extérieur (12), ladite soupape hydraulique (22) étant agencée sous le plan de la partie de sol (2).

8. Véhicule selon la revendication 7, **caractérisé en ce que** l'ensemble de pédale (1) comprend un deuxième capteur pour détecter le mouvement de la pédale de frein (15, 16), ledit deuxième capteur étant supporté par la console (3) et agencé au-dessus du plan de la partie de sol (2).

9. Véhicule selon la revendication 6, **caractérisé en ce que** le capteur de la pédale d'accélérateur (24) est un capteur sans contact agencé pour détecter le mouvement de l'arbre intérieur (9).

10. Véhicule selon la revendication 9, **caractérisé en ce que** le capteur de la pédale d'accélérateur (24) est agencé au-dessus du plan de la partie de sol (2).
